# EUROPÄISCHE PATENTANMELDUNG

(11) **EP 1 340 788 A2**
(43) Veröffentlichungstag der Anmeldung: **03.09.2003**
(21) Anmeldenummer: 03290195.1
(22) Anmeldetag: 24.01.2003
(51) Int. Cl.: C08K 5/00, H01B 3/30

(54) **Verfahren zur Herstellung eines Compounds auf Basis eines thermoplastischen Kunststoffs**

(30) Priorität: 22.02.2002 DE 10207673
(71) Anmelder: Nexans, 75008 Paris (FR)
(72) Erfinder: Rietz, Andreas, Dipl.-Ing., 30419 Nürnberg (DE); Müller, Friedrich, Dipl.-Ing., 91207 Lauf (DE); Brix, Susanne, Dipl.-Ing., 90542 Eckenthal (DE)
(74) Vertreter: Döring, Roger, Dipl.-Ing.

(57) **Zusammenfassung**

Es wird ein Verfahren zur Herstellung eines Compounds auf Basis eines thermoplastischen Kunststoffs angegeben, das durch Bestrahlung mit im ultravioletten Bereich liegenden Licht vernetzbar ist. Einem thermoplastischen Basismaterial werden dabei zumindest ein Photoinitiator und ein Vernetzungsmittel hinzugegeben. Zur Fertigstellung des Compounds werden 100 Teilen Basismaterial 0,2 bis 3 Teile eines Alkylbenzophenons bzw. eines Derivats desselben als Photoinitiator sowie 0,2 bis 3 Teile eines Vernetzungsmittels und 0,1 bis 5 Teile Stabilisatoren hinzugegeben.

## Beschreibung

Die Erfindung bezieht sich auf ein Verfahren zur Herstellung eines Compounds auf Basis eines thermoplastischen Kunststoffs, das durch Bestrahlung mit im ultravioletten Bereich liegenden Licht vernetzbar ist, bei welchem einem thermoplastischen Basismaterial zumindest ein Photoinitiator und ein Vernetzungsmittel hinzugegeben werden (EP 0 490 854 B1).

Thermoplastische Kunststoffe (Thermoplaste) sind ohne besondere Behandlung für viele technische Anwendungsgebiete nicht einsetzbar, da sie beispielsweise bei höheren Temperaturen weich werden und sogar schmelzen. Durch Vernetzen können die Eigenschaften von Thermoplasten so verändert werden, daß sie für nahezu alle technischen Anwendungen eingesetzt werden können. So können durch Vernetzung beispielsweise Zugfestigkeit, Abriebfestigkeit und Formbeständigkeit vieler Materialien erhöht werden. Die Materialien erhalten auch eine größere Beständigkeit gegen Öl, Lösungsmittel und andere aggressive Medien.

Zum Vernetzen von Thermoplasten sind beispielsweise chemische Verfahren bekannt, bei welchen dem Basismaterial z. B. Peroxide zugegeben werden (US 33 92 135 A). Die Vernetzung wird unter Anwendung von hohen Temperaturen und Drücken durchgeführt, was einen erheblichen Energieeinsatz und einen großen apparativen Aufwand bedeutet. Dieser Mangel der chemischen Vernetzung besteht bei der physikalischen Vernetzung mit Elektronenstrahlen nicht (DE 34 24 128 C2). Es wird vielmehr eine schnelle und kontinuierliche Arbeitsweise ermöglicht, die in der Praxis für viele Thermoplaste und auch Elastomere eingesetzt wird. Anlagen zur Strahlenvernetzung sind jedoch teuer. Sie erfordern außerdem Maßnahmen zur Vermeidung von Streustrahlung und zum wirksamen Schutz von Bedienungspersonal.

In der eingangs erwähnten EP 0 490 854 B1 ist ein Verfahren zum kontinuierlichen Vernetzen von einen Photoinitiator enthaltenden Ethylenkunststoffen beschrieben, bei dem zum Vernetzen ultraviolettes Licht eingesetzt wird. Als Photoinitiator wird ein Benzophenonderivat mit hohem Molekulargewicht verwendet. Dieses Verfahren ist auf Ethylenkunststoffe, insbesondere Polyethylen, und den speziellen Photoinitiator beschränkt.

Der Erfindung liegt die Aufgabe zugrunde, das eingangs geschilderte Verfahren so zu gestalten, daß es für beliebige thermoplastische Materialien einsetzbar ist.

Diese Aufgabe wird gemäß der Erfindung dadurch gelöst, daß 100 Teilen Basismaterial 0,2 bis 3 Teile eines Alkylbenzophenons bzw. eines Derivats desselben als Photoinitiator sowie 0,2 bis 3 Teile eines Vernetzungsmittels und 0,1 bis 5 Teile Stabilisatoren hinzugegeben werden.

Das bei diesem Verfahren als Photoinitiator eingesetzte Alkylbenzophenon ist ebenso wie seine ebenfalls verwendbaren Derivate ein handelsübliches Material. Es hat sich überraschend herausgestellt, daß durch den Zusatz dieses Materials zu unterschiedlichen Thermoplasten eine Vernetzung derselben durch ultraviolettes Licht möglich ist. Dabei sind keine chemischen Umwandlungsprozesse erforderlich, sondern es reicht die Zugabe von Alkylbenzophenon oder eines Derivats desselben in vorgebbarer Menge zum jeweiligen Basismaterial aus. Welches Thermoplast eingesetzt werden soll, gibt nur der jeweilige Anwendungszweck vor. Verwendbare Thermoplaste sind insbesondere Polyvinylchlorid, Polypropylen und seine Copolymere, Polyethylen und seine Copolymere, Polyurethan und Ethylenvinylacetat. In diesem Sinne besonders als Photoinitiator geeignet ist das Alkylbenzophenon "Dodecylbenzophenon".

Das Verfahren ist besonders bei der Herstellung von elektrischen Leitungen von Vorteil, bei denen das Compound als Isoliermaterial für Adern oder auch als Mantelmaterial eingesetzt werden kann. Die Vernetzung des Compounds ist dann im kontinuierlichen Durchlauf mit üblichen Abzugsgeschwindigkeiten möglich. Dabei werden die Wandstärken der zu vernetzenden Schichten und die Leistung der eingesetzten UV-Lampe bzw. UV-Lampen sinnvoll aufeinander abgestimmt.

Das Verfahren ist auch für Compounds einsetzbar, die erhöhten Anforderungen an Unbrennbarkeit, Flammwidrigkeit und Rauchentwicklung genügen müssen. Dem Compound können dazu Flammhemmer und Flammschutzmittel sowie weitere Füllstoffe beigegeben werden, wie beispielsweise Kreide.

Das Verfahren nach der Erfindung und seine Anwendung bei elektrischen Leitungen werden im folgenden in Ausführungsbeispielen beschrieben.

Als mittels ultraviolettem (UV) Licht vernetzbare Thermoplaste können beispielsweise folgende Materialien verwendet werden:

Polyvinylchlorid, Polypropylen und Copolymere desselben, Polyethylen und Copolymere desselben, Polyurethan und Ethylenvinylacetat. Damit ist nur eine Auswahl von grundsätzlich einsetzbaren Thermoplasten angegeben. Im folgenden wird - stellvertretend für alle anderen verwendbaren Materialien - das Polyurethan berücksichtigt.

Ein durch UV-Licht vernetzbares, mit dem Verfahren nach der Erfindung herstellbares Compound hat beispielsweise folgende Zusammensetzung:
100 Teile Polyvinylchlorid
0,2 bis 3 Teile Alkylbenzophenon
0,2 bis 3 Teile Vernetzungsmittel
0,1 bis 5 Teile Stabilisatoren.

Als Alkylbenzophenon wird mit Vorteil Dodecylbenzophenon eingesetzt. Geeignete Vernetzungsmittel sind in erster Linie Trimethylol-propane-trimethacrylat (TRIM) oder auch Triallylcyanurat (TAC). Zu den Stabilisatoren gehören auch Antioxidantien und Alterungsschutzmittel.

Durch Zugabe geeigneter Stoffe kann das Brandverhalten des Compounds verbessert werden. Solche, dem oben beschriebenen Compound hinzuzugebenden Stoffe sind beispielsweise:
10 bis 120 Teile Kreide als Füllstoff
20 bis 160 Teile eines Flammhemmers
2 bis 50 Teile eines Flammschutzmittels.

Als Flammhemmer sind insbesondere Aluminium-Trihydroxid (ATH) und Magnesiumhydroxid (Mg(OH)₂) geeignet. Als Flammschutzmittel können beispielsweise Decabromodiphenyloxid oder Dodecachlor-dodecahydro-dimethanodibenzo-cyclooctene verwendet werden, jeweils in Kombination mit Antimontrioxid. Außer Antioxidantien und Alterungsschutzmitteln können außerdem Gleitmittel und Weichmacher hinzugegeben werden.

Das mit dem Verfahren nach der Erfindung hergestellte Compound kann mit Vorteil bei der Herstellung von elektrischen Leitungen eingesetzt werden. Das Compound dient dann als Isoliermaterial, und zwar als Isolierung für elektrische Leiter oder als Mantel für Leitungen, in deren Seele mindestens zwei isolierte Leiter zusammengefaßt sind. Das Compound wird dazu einem Extruder aufgegeben, welcher die jeweilige Isolierschicht im kontinuierlichem Durchlauf um einen Leiter oder eine Seele herumformt. Im gleichen Arbeitsgang wird das Compound ebenfalls im kontinuierlichen Durchlauf mittels UV-Lichts vernetzt.

Wenn beispielsweise ein elektrischer Leiter isoliert werden soll, dann wird eine Isolierung mit einer zwischen 0,1 mm und 0,8 mm liegenden Wandstärke erzeugt. Die Isolierung ist vorzugsweise zwischen 0,2 mm und 0,5 mm dick. Der isolierte Leiter wird zur Vernetzung der Isolierung mit UV-Licht bestrahlt. Dazu wird mindestens eine UV-Lampe (Strahler) mit einer zwischen 50 Watt/cm und 300 Watt/cm liegenden Leistung verwendet. Zweckmäßig werden zwei oder mehr UV-Lampen in Umfangsrichtung versetzt um den isolierten Leiter herum angeordnet. Bei höherer Abzugsgeschwindigkeit können in Abzugsrichtung versetzt auch zusätzliche UV-Lampen angeordnet werden. Die Leistung der jeweils einzusetzenden UV-Lampen richtet sich nach der innerhalb der angegebenen Grenzen liegenden tatsächlichen Dicke der Isolierung.

Wenn das Compound als Mantel für eine elektrische Leitung verwendet werden soll, dann kann die zu extrudierende Wandstärke beispielsweise zwischen 0,2 mm und 1,2 mm liegen. Für das Vernetzen des jeweiligen Mantels gilt analog das gleiche wie weiter oben für die Isolierung eines Leiters beschrieben.

## Patentansprüche

1. Verfahren zur Herstellung eines Compounds auf Basis eines thermoplastischen Kunststoffs, das durch Bestrahlung mit im ultravioletten Bereich liegenden Licht vernetzbar ist, bei welchem einem thermoplastischen Basismaterial zumindest ein Photoinitiator und ein Vernetzungsmittel hinzugegeben werden, **dadurch gekennzeichnet, daß** 100 Teilen Basismaterial 0,2 bis 3 Teile eines Alkylbenzophenons bzw. eines Derivats desselben als Photoinitiator sowie 0,2 bis 3 Teile eines Vernetzungsmittels und 0,1 bis 5 Teile Stabilisatoren hinzugegeben werden.

2. Verfahren nach Anspruch 1, **dadurch gekennzeichnet, daß** als Photoinitiator Dodecylbenzophenon verwendet wird.

3. Verfahren nach Anspruch 1 oder 2, **dadurch gekennzeichnet, daß** als Vernetzungsmittel Trimethyl-propane-trimethacrylat verwendet wird.

4. Verfahren nach Anspruch 1 oder 2, **dadurch gekennzeichnet, daß** als Vernetzungsmittel Triallylcyanurat verwendet wird.

5. Verfahren nach einem der Ansprüche 1 bis 4, **dadurch gekennzeichnet, daß** dem Basismaterial zusätzlich Stoffe zur Verbesserung des Brandverhaltens beigegeben werden.

6. Verfahren nach Anspruch 5, **dadurch gekennzeichnet, daß** dem Compound 10 bis 120 Teile Kreide, 20 bis 160 Teile Flammhemmer und 2 bis 50 Teile Flammschutzmittel hinzugegeben werden.

7. Verfahren nach Anspruch 6, **dadurch gekennzeichnet, daß** als Flammhemmer Aluminium-Trihydroxid verwendet wird.

8. Verfahren nach Anspruch 6, **dadurch gekennzeichnet, daß** als Flammhemmer Magnesiumhydroxid verwendet wird.

9. Verfahren zum Herstellen einer elektrischen Leitung mit einer mindestens einen elektrischen Leiter enthaltenden Seele unter Verwendung des Compounds nach einem der Ansprüche 1 bis 8, mit welchem um die Seele eine Schicht aus dem Compound herum extrudiert wird und mit welchem das Isoliermaterial danach durch Bestrahlung mit im ultravioletten Bereich liegenden Licht vernetzt wird.

10. Verfahren nach Anspruch 9, **dadurch gekennzeichnet,**
― **daß** die Schicht aus Isoliermaterial mit einer zwischen 0,1 mm und 1,2 mm liegenden Wandstärke auf die Seele aufgebracht wird und
― **daß** zur Vernetzung des Isoliermaterials mindestens eine, ultraviolettes Licht abstrahlende Lampe mit einer zwischen 50 Watt/cm und 300 Watt/cm liegenden Leistung verwendet wird.

11. Verfahren nach Anspruch 10, **dadurch gekennzeichnet, daß** eine Schicht aus Isoliermaterial mit einer Wandstärke zwischen 0,2 mm und 0,5 mm extrudiert wird.

12. Verfahren nach Anspruch 10 oder 11, **dadurch gekennzeichnet, daß** zur Bestrahlung des Isoliermaterials zwei oder mehr Lampen eingesetzt werden.
